# FASCICULE DE BREVET EUROPEEN

(11) **EP 3 362 379 B1**
(45) Date de publication et mention de la délivrance du brevet: **09.03.2022**
(21) Numéro de dépôt: 16795114.4
(22) Date de dépôt: 09.10.2016
(51) Int. Cl.: B65G 1/02, B65G 1/04, B65G 1/137

(54) **SYSTEME DE PRÉPARATION DE COMMANDES DOTÉ DE CHARIOTS POURVUS DE MOYENS DE GRIMPE**
KOMMISSINIERSYSTEM MIT KLETTERNDEN TRANSPORTFAHRZEUGEN
COMMISSIONING SYSTEM WITH CLIMBING CARRIAGES

(30) Priorité: 13.10.2015 FR 1559698
(43) Date de publication de la demande: 22.08.2018
(73) Titulaire: EXOTEC, 59170 Croix (FR)
(72) Inventeur: MOULIN, Romain, 75014 Paris (FR); HEITZ, Renaud, 59650 Villeneuve d'Ascq (FR)
(74) Mandataire: Ermeneux, Bertrand
(86) Numéro de dépôt international: PCT/FR2016/052609
(87) Numéro de publication internationale: WO 2017/064401

(56) Documents cités:
- WO-A2-2010/100513
- DE-U1- 9 320 592
- US-A1- 2011 094 854
- US-A1- 2014 031 972
- US-A1- 2014 257 555
- US-B1- 7 381 022

## Description

### 1. Domaine de l'invention

Le domaine de l'invention est celui de la logistique en entrepôt et en particulier de la manutention et du transport de pièces ou de produits.

Plus précisément, l'invention concerne un système de préparation de commandes.

L'invention trouve une application dans l'automatisation de la gestion des flux d'un entrepôt de stockage, par exemple dans un entrepôt de préparation de commandes d'une chaîne logistique.

### 2. État de la technique

Dans la chaîne logistique globale, la gestion des flux et la manipulation des produits au sein d'un entrepôt jouent un rôle déterminant.

Traditionnellement, un préparateur de commandes se déplace dans l'entrepôt pour collecter chaque produit d'une commande à son emplacement sur une étagère d'un rayonnage.

On constate qu'une telle organisation implique que le préparateur parcoure de longs trajets au cours d'une journée de travail, ce qui occasionne fatigue et perte de temps lorsque le trajet n'est pas optimisé.

Un autre inconvénient est que le préparateur doit parfaitement connaître l'agencement de l'entrepôt pour ne pas perdre de temps.

Pour limiter la fatigue due aux déplacements, améliorer la gestion de la cueillette (ou « picking » en anglais), réduire le temps de préparation des commandes et son coût, on a imaginé une organisation des entrepôts où les produits sont acheminés par des machines jusqu'à des postes de préparation de commandes.

Ainsi, on a proposé de mettre en œuvre des convoyeurs pour transporter les produits des rayonnages jusqu'aux postes de préparation, au sein d'un entrepôt.

Un inconvénient de cette technique connue est qu'elle nécessite une infrastructure lourde et onéreuse.

Un autre inconvénient de cette technique est qu'il est complexe et coûteux de la faire évoluer.

Encore un inconvénient, est que les convoyeurs sont encombrants, ce qui entraîne une perte de surface utile de stockage importante.

On connaît également une technique consistant à déplacer horizontalement, le long d'un rayonnage, un mat supportant un ascenseur qui permet d'atteindre chaque niveau du rayonnage, afin de prélever ou de déposer un bac.

Un inconvénient de cette technique est qu'il faut envisager d'installer un mat par rayonnage dans l'entrepôt.

Un autre inconvénient de cette technique connue est qu'il faut prévoir un ou plusieurs convoyeurs à l'extrémité de chaque rangée de rayonnages pour transporter les bacs prélevés par les mats vers la zone de préparation de commandes.

Sur un principe similaire, on connaît une technique consistant à utiliser des navettes autoguidées se déplaçant sur des voies de circulation, formées de rails, agencées sur plusieurs niveaux, chacune à hauteur d'une étagère d'un rayonnage. Pour changer de niveau, les navettes empruntent un ascenseur dédié, disposé à l'extrémité du rayonnage. Lorsqu'une navette a prélevé un bac sur une étagère, elle descend le déposer sur un convoyeur situé au pied du rayonnage.

Un inconvénient de cette technique connue est que les navettes ne peuvent pas se déplacer d'un rayonnage à l'autre, ce qui impose de prévoir un nombre important de navettes.

Un autre inconvénient de cette technique est qu'il faut prévoir des voies de circulation et des convoyeurs, ce qui est couteux.

Encore un inconvénient de cette technique est que les navettes doivent attendre que l'ascenseur se libère pour pouvoir accéder au convoyeur, ce qui ralentit la préparation des commandes.

Dans une variante, et pour réduire le nombre de voies de circulation, on a imaginé déplacer un ascenseur sur une voie de circulation, pour permettre aux navettes d'atteindre quelques étagères au-dessus du niveau de la voie de circulation.

Un inconvénient de cette variante est qu'elle est encore plus couteuse et complexe à mettre en oeuvre.

On a également proposé de transporter des rayonnages disposés dans l'entrepôt jusqu'à une zone de préparation de commandes à l'aide de robots. Pour cela, un robot vient se placer sous le rayonnage et le soulève pour pouvoir le transporter.

Un inconvénient de cette technique connue est que le volume de stockage est limité en hauteur, pour éviter le basculement des rayonnages lors du transport.

Pour augmenter le volume stocké dans un entrepôt, on a par ailleurs pensé à stocker les marchandises directement dans des bacs empilés en hauteur et regroupés sur une zone de stockage.

Des robots circulant au sommet du volume de stockage sont utilisés pour extraire les bacs contenants les objets ou marchandises d'une commande. Lorsqu'un robot doit prélever un bac qui n'est pas entreposé sur le niveau supérieur, le robot dépile successivement, l'un après l'autre les bacs situés au-dessus de ce bac. Lors de cette opération, le robot replace au fur et à mesure chaque bac dépilé dans un logement vide sur la surface du volume de stockage.

Un inconvénient de cette technique est que les robots manipulent à chaque fois une grande quantité de bacs pour extraire un seul bac, ce qui ralentit la préparation de la commande.

On connait également, par exemple du document US 7101139 B1 , un robot équipé de deux roues dentées rétractables de chaque côté de son châssis, destinées à s'engrener sur des crémaillères verticales fixées à des rayonnages, lui permettant de s'élever entre deux rayonnages pour accéder aux bacs dans lesquels des objets à prélever sont stockés ou jusqu'au niveau d'un véhicule automobile à descendre d'une place d'un garage à voitures sur rayonnages.

On connait aussi du document WO 2010/100513 A2, un robot pouvant grimper sur deux montants d'un même rayonnage. Ce robot est équipé à cet effet d'une roue dentée à l'avant et d'une roue dentée à l'arrière, qui s'engrènent dans une crémaillère fixée sur chacun des montants.

WO 2010/100513 A2 divulgue un système de préparation de commandes selon le préambule de la revendication 1.

Un inconvénient de cette technique connue de robot équipé de quatre roues dentées rétractables est que le robot peut rester bloqué lors de la montée ou de la descente, si la progression en hauteur d'une des quatre roues dentées sur les crémaillères n'est pas parfaitement identique, à chaque instant, à celle des autres roues dentées.

### 3. Objectifs de l'invention

L'invention a donc notamment pour objectif de pallier les inconvénients de l'état de la technique cités ci-dessus.

Plus précisément, l'invention a pour objectif de fournir une technique de préparation de commandes qui limite l'intervention humaine et qui soit simple à mettre en œuvre.

Un autre objectif de l'invention est de fournir une technique de préparation de commandes qui soit peu couteuse.

Encore un objectif de l'invention est de proposer une technique de préparation de commande qui soit compatible avec une zone de stockage dense.

Un objectif de l'invention est de fournir une technique de préparation de commandes qui puisse s'adapter aisément à des évolutions de la zone de stockage.

Un objectif de l'invention est de proposer une telle technique qui permette d'utiliser des rayonnages de hauteurs et/ou d'orientations différentes dans un même entrepôt.

Un autre objectif de l'invention est également de fournir une technique de préparation de commandes permettant d'utiliser des rayonnages existants.

Encore un objectif de l'invention est de fournir une technique de préparation de commandes qui soit sans danger pour les opérateurs évoluant dans le même entrepôt.

### 4. Exposé de l'invention

Ces objectifs, ainsi que d'autres qui apparaîtront par la suite sont atteints à l'aide d'un système de préparation de commandes selon la revendication 1 comprenant deux montants solidarisés à deux rayonnages distincts et un chariot à guidage automatique présentant au moins deux roues de roulage, destiné à prélever des objets d'une commande dans au moins un desdits rayonnages et des moyens de grimpe motorisés aptes à coopérer avec lesdits montants de sorte à permettre audit chariot de s'élever le long desdits montants,
lesdits moyens de grimpe comprenant deux roues dentées et/ou deux courroies crantées d'axes sensiblement parallèles, destinées chacune à coopérer avec un desdits deux montants, les axes des roues dentées et/ou les axes des poulies entraînant lesdites courroies crantées étant sensiblement orthogonaux aux axes des roues de roulage,
chacun desdits montants présentant une pluralité d'encoches s'étendant sensiblement perpendiculairement à l'axe longitudinal dudit montant, destinées à accueillir les dents de ladite roue dentée ou de ladite courroie crantée coopérant avec ce montant et espacées de la valeur du pas de ladite roue dentée ou de ladite courroie crantée,
chacune des roues dentées ou des courroies crantées étant montée sur un support mobile par rapport au châssis dudit chariot entre deux positions :
   - une position écartée dans laquelle au moins une partie de ladite roue dentée ou de ladite courroie crantée montée sur ledit support fait saillie latéralement hors de l'alignement dudit châssis ;
   - une position rétractée, dans laquelle la roue dentée ou la courroie crantée montée sur ledit support est en vis-à-vis dudit châssis.

L'invention concerne donc un système qui permet de limiter l'intervention humaine à la seule mise en carton des marchandises commandée, grâce à au moins un chariot à guidage automatique qui prélève les objets commandés dans les rayonnages et qui transporte ces objets jusqu'à une zone de préparation de commandes où un opérateur met ces objets en carton.

Ce chariot est avantageusement configuré de sorte à pouvoir grimper, c'est-à-dire à monter en s'agrippant, sur un montant pour s'élever face à un rayonnage ou le long de celui-ci, si le montant est un montant fixé sur ou intégré au rayonnage.

Par ailleurs, les moyens de grimpe permettent au chariot de rester constamment en prise avec le ou les montants lors de sa montée ou de sa descente et de maintenir le chariot sensiblement horizontal, ce qui permet de prévenir une chute du bac ou de l'objet porté par le chariot.

Les deux supports mobiles permettent en outre au chariot de se glisser entre deux montants lorsque les supports mobiles sont rétractés, puis en écartant les supports mobiles, de grimper le long des montants.

On notera que les deux montants sont avantageusement solidarisés à deux rayonnages distincts, de façon à permettre au chariot de grimper à cheval sur ces deux rayonnages.

Selon l'invention, lesdits moyens de grimpe comprennent des moyens pour empêcher le basculement dudit chariot comprenant au moins une contre-roue destinée à rouler sur un desdits montants, montée sur un desdits supports.

Ainsi, le châssis du chariot ne s'incline pas et reste parfaitement horizontal, ce qui l'empêche de se bloquer entre les montants lors d'une montée ou d'une descente.

Selon l'invention, lesdits moyens de grimpe comprennent deux et seulement deux roues dentées et/ou deux et seulement deux courroies crantées.

Ainsi, on limite les risques de blocage du chariot entre les montants.

Selon un mode de réalisation particulier de l'invention, le montant est un rail profilé en C.

Selon un mode de réalisation particulier de l'invention, le montant est un rail profilé en U.

Selon un mode de réalisation particulier de l'invention, lesdits montants sont des montants de deux rayonnages distincts, de façon à permettre au chariot de grimper à cheval sur ces deux rayonnages.

Selon un mode de réalisation particulier de l'invention, un système de préparation de commandes tel que décrit ci-dessus comprend des moyens de fixation desdits montants auxdits rayonnages.

Dans un mode de réalisation particulier de l'invention, les montants sont fixés au sol à proximité d'un ou de plusieurs rayonnages.

Préférentiellement, ledit chariot présente des moyens de préhension d'un bac de stockage d'objets.

Le chariot peut prélever ou déposer de manière autonome un bac sur l'étagère d'un rayonnage à son emplacement de stockage, sans intervention extérieure, notamment sans intervention humaine.

De tels moyens de préhension peuvent comprendre, par exemple, une pelle télescopique, des bras latéraux télescopiques et/ou une fourche télescopique équipée d'un doigt pour pousser ou tirer un bac.

Selon un mode de réalisation particulier de l'invention, au moins une des roues de roulage et les moyens de grimpe motorisés sont entraînés par le même moteur.

On obtient ainsi un système particulièrement simple à mettre en œuvre.

Selon un mode de réalisation avantageux de l'invention, un système de préparation de commandes tel que décrit ci-dessus comprend des moyens de freinage des moyens de grimpe.

Ainsi on sécurise la descente du chariot, lorsque celui-ci est défaillant, et en particulier lorsque la batterie électrique alimentant les moteurs des moyens de grimpe est déchargée.

Le freinage peut dans un mode de réalisation particulier de l'invention être de type "visqueux" et obtenu par un freinage magnétique, en shuntant l'induit du moteur.

Selon un mode de réalisation particulier de l'invention, un desdits montants est un montant d'un premier rayonnage et l'autre montant est un montant d'un deuxième rayonnage parallèle audit premier rayonnage, lesdits premier et deuxième rayonnages délimitant une allée de circulation dudit chariot.

Ainsi, le chariot peut grimper en appui à cheval sur les montants de deux rayonnages parallèles en vis-à-vis, placés de part et d'autre de l'allée de circulation.

Selon l'invention, lesdits supports sont montés sensiblement à deux extrémités opposées du châssis dudit chariot, suivant une diagonale.

La masse du chariot, qu'il soit ou non chargé, se répartit ainsi de part et d'autre d'une diagonale du châssis, ce qui limite le porte à faux et réduit les efforts exercés sur les contre-roues.

De préférence, une chaîne est solidarisée à chacun desdits montants et lesdites encoches sont formées par l'espace intérieur des maillons desdites chaines.

Avantageusement, ladite chaîne est montée au fond du rail profilé en C formant le montant.

On obtient ainsi une échelle d'escalade des rayonnages simple à mettre en œuvre et particulièrement facile à entretenir, car il suffit en cas d'usure localisée d'une encoche de changer le maillon concerné. En outre, il est plus simple et moins coûteux de changer la chaîne plutôt qu'un montant complet lorsque l'usure est répartie.

Avantageusement, lesdites roues dentées ou lesdites courroies crantées sont entraînées par des moteurs indépendants.

Ainsi, les deux roues dentées des deux moyens de grimpe peuvent tourner à des vitesses différentes choisies par l'unité de commande, pour maintenir le chariot horizontal, s'il existe des écarts dimensionnels entre les encoches des deux montants.

Selon un mode de réalisation particulier de l'invention, lesdits moyens pour empêcher le basculement comprennent quatre contre-roues par support, d'axes orthogonaux aux axes des roues dentées ou des courroies crantées, agencées par paires et destinées à rouler sur deux faces latérales distinctes d'un montant.

Ainsi, le chariot ne peut pas s'incliner d'un côté ou de l'autre de la ligne diagonale reliant lesdites deux extrémités opposées du châssis.

Avantageusement, lesdits moyens de grimpe comprennent au moins une roue d'appui, d'axe parallèle à l'axe desdites roues dentées ou desdites courroies crantées, destinée à rouler sur la face tournée vers l'extérieur du rayonnage d'un desdits montants.

Ainsi, la position latérale du chariot entre les deux rayonnages est maintenue constante, ce qui empêche les dents des roues dentées ou les crans des courroies de frotter à travers la chaîne sur le fond du rail profilé en C et limite l'apparition d'une usure prématurée.

### 5. Liste des figures

D'autres caractéristiques et avantages de l'invention apparaîtront plus clairement à la lecture de la description suivante de deux modes de réalisation de l'invention, donnés à titre de simples exemples illustratifs et non limitatifs, et des dessins annexés parmi lesquels :
- la figure 1 est une vue schématique, en perspective d'un entrepôt équipé d'un exemple de système de préparation de commandes ;
- la figure 2 est une représentation schématique en perspective d'un chariot à guidage automatique utilisé dans l'entrepôt illustré en référence à la figure 1 ;
- la figure 3 est une vue de détail des moyens de grimpe du chariot présenté en référence à la figure 2 ;
- la figure 4 est une vue en coupe d'un profilé utilisé comme montant des rayonnages illustrés en référence à la figure 1 ;
- les figures 5A à 5D illustrent les étapes successives effectuées par le chariot présenté en référence à la figure 2, pour grimper sur deux montants ;
- la figure 6 est une vue de détail de la figure 5C centré sur les moyens de grimpe du chariot ;
- la figure 7 est une vue schématique de détail d'un autre exemple de système de préparation de commandes;
- la figure 8 est une vue schématique de détail d'une variante de mise en œuvre des moyens de grimpe du système de préparation de commandes illustré sur la figure 2 ;
- la figure 9 est une représentation schématique en perspective d'un autre exemple de système de préparation de commandes ;
- la figure 10 est une vue de dessus du chariot présenté en référence à la figure 9, escaladant un rayonnage ;
- la figure 11 est une vue en perspective du chariot présenté en référence à la figure 9 qui entame un déplacement sur un niveau de rayonnage ;
- la figure 12 est une vue en perspective d'un autre exemple de système de préparation de commandes dans lequel un chariot grimpe entre deux rayonnages ;
- la figure 13 est une vue en perspective d'une autre variante de mise en œuvre des moyens de grimpe du système de préparation de commandes illustré en référence à la figure 2 ;
- la figure 14 est une vue de dessous d'un mode de réalisation d'un système de préparation de commandes selon l'invention dans lequel un chariot grimpe en appui sur deux rayonnages parallèles ;
- la figure 15 est une vue de côté du chariot présenté en référence à la figure 14.

### 6. Description détaillée de l'invention

### 6.1. Exemple de système de préparation de commandes

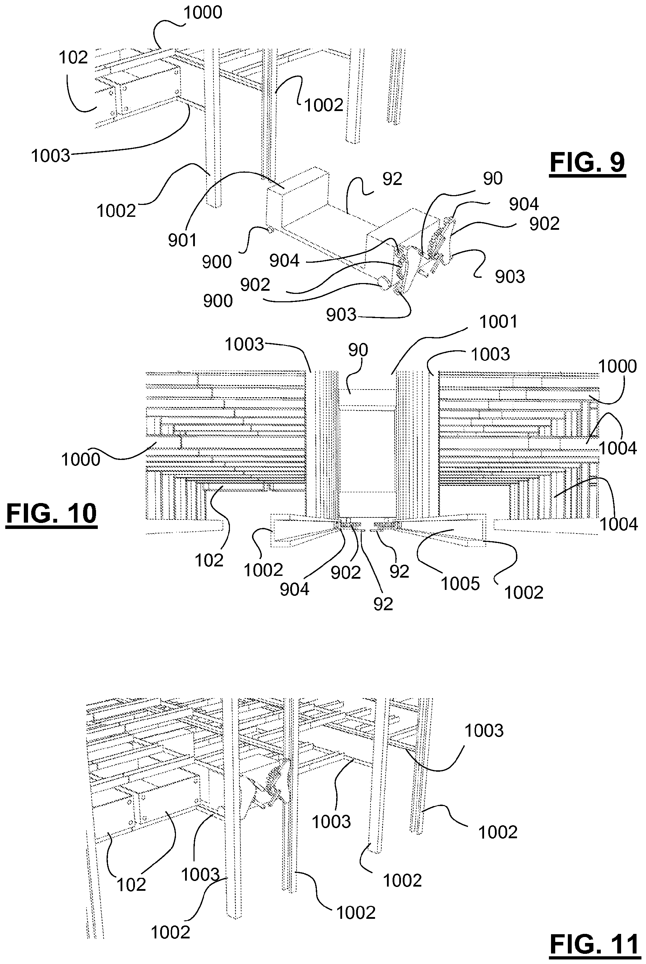

On a illustré sur la **figure 10** un entrepôt équipé de rayonnages 1000 identiques disposés en parallèle. L'espace entre deux rayonnages 1000 forme une travée 1001 qui sert d'allée de circulation au sol pour des robots 90. L'ossature de chaque rayonnage 1000 comprend des montants 1002 disposés en tête de travées et des lisses 1003 horizontales solidaires entre chaque montant 1002. Ces lisses 1003 correspondent aux étages ou niveaux 1004 de rangement ou stockage des bacs 102.

Sur la **figure 9****,** on a représenté de façon schématique un des chariots autoguidés 90, dont le châssis 901 est monté sur quatre roues 900 et est équipé de deux modules de grimpe 91 et d'un plateau 92 pour le transport des bacs 102. Ce robot 90 est équipé d'une pelle télescopique non représentée pour la manipulation des bacs 102 transportés sur le plateau 92.

Les modules de grimpe 91 sont formés chacun d'un support mobile qui porte une roue dentée 902, un galet de guidage 903 et une contre-roue 904. Ces supports sont mobiles latéralement par rapport au châssis 901 et peuvent être écartés sur le côté du robot pour escalader des montants 1002, ou être rétracté, lorsque le robot 90 roule sur le sol ou sur des lisses 1003 d'un rayonnage 1000. Lorsque chaque support mobile est en position écartée, la roue dentée 902, le galet de guidage 903 et la contre-roue 904 font latéralement saillie hors de l'alignement du châssis de telle sorte à pouvoir coopérer avec les montants 1002 de deux rayonnages. Par ailleurs, en position rétractée, les supports mobiles permettent au robot 90 de franchir l'entrée de l'allée formée des deux montants 1002. En outre, on remarque que les axes des deux roues dentées 902 sont sensiblement orthogonaux aux axes des roues motrices 900 de roulage.

Comme on peut le voir sur la figure 10, le robot 90 peut grimper à cheval sur deux rayonnages 1000 disposés en vis-à-vis de part et d'autre de la travée 1001 en s'aidant des montants 1002 présents à l'extrémité de la travée 1001. Dans ce mode de réalisation particulier de l'invention, les montants 1002 sont des profilés en U dont le fond perforé sert d'échelle 1005 pour les roues dentées 902 du robot 90. De plus, le robot 90 est retenu par le galet et la contre-roue de chaque support, en appui sur les montants 1002.

Pour débuter une ascension, le robot 90 aligne les modules de grimpe 91 et plus particulièrement les roues dentées 902 avec les échelles 1005 des montants 1002. Ensuite, le robot 90 écarte les modules de grimpe 91 afin que les roues dentées 902 s'engrènent avec les échelles 1005. Puis, il monte sur les échelles 1005 jusqu'au niveau 1004 où est stocké le bac 102 qu'il doit transporter.

Comme l'illustre la **figure 11****,** arrivé au niveau 1004, le robot 90 déploie ses roues 900 sur les côtés de telle sorte qu'elles reposent sur deux lisses 1003 en vis-à-vis de part et d'autre de l'allée 1001. Ensuite, le robot 90 rétracte les deux modules de grimpe 91 pour se libérer des montants 1002. Le robot 90 peut ainsi se déplacer longitudinalement sur les lisses 1003 qui supportent et servent de guide ou chemin de roulement au robot 90. Lorsque le robot 90 a atteint l'emplacement d'emmagasinage du bac 102 recherché, il s'aligne, prélève le bac 102 sur l'un ou l'autre des deux rayonnages 1000, à l'aide de la pelle télescopique.

Une fois en possession du bac 102 à convoyer, le robot 90 rejoint l'extrémité du rayonnage, pour redescendre au sol à l'aide des deux modules de grimpe 91 agrippés aux montants 1002.

### 6.2. Exemple de mode de réalisation selon l'invention

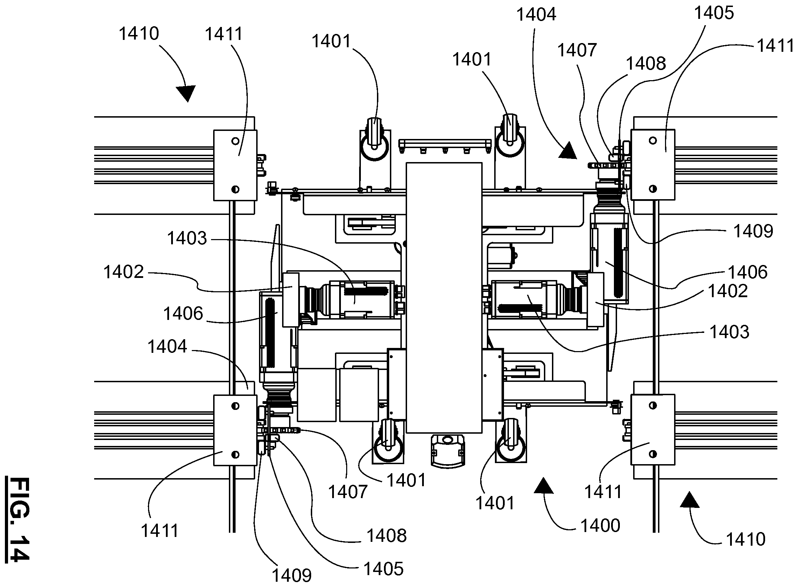

Selon un autre exemple de mode de réalisation de l'invention illustré sur la **figure 14****,** un robot 1400 représenté en vue de dessous est porté par quatre roues folles 1401 et tracté par deux roues motrices 1402 actionnées par des moteurs 1403. Ainsi, sur un sol sensiblement plan et horizontal, le chariot autoguidé 1400 peut suivre des trajectoires rectilignes, courbes et tourne sur luimême en fonction de la commande de la rotation des moteurs. Il se déplace dans l'entrepôt, notamment dans des allées délimitées par deux rayonnages 1410 sensiblement parallèles.

Pour escalader des rayonnages 1410, le châssis du robot 1400 est équipé, dans une diagonale du châssis, respectivement à son extrémité arrièredroite et à son extrémité avant-gauche, d'un module de grimpe 1404 rétractable apte à coopérer avec un montant 1411 des deux rayonnages 1410 délimitant l'allée dans laquelle se trouve le robot 1400. Chaque module de grimpe 1404 comprend une embase 1405 qui supporte un moteur 1406 actionnant une roue dentée 1407, une roue d'appui latéral 1408 et quatre contre-roues 1409.

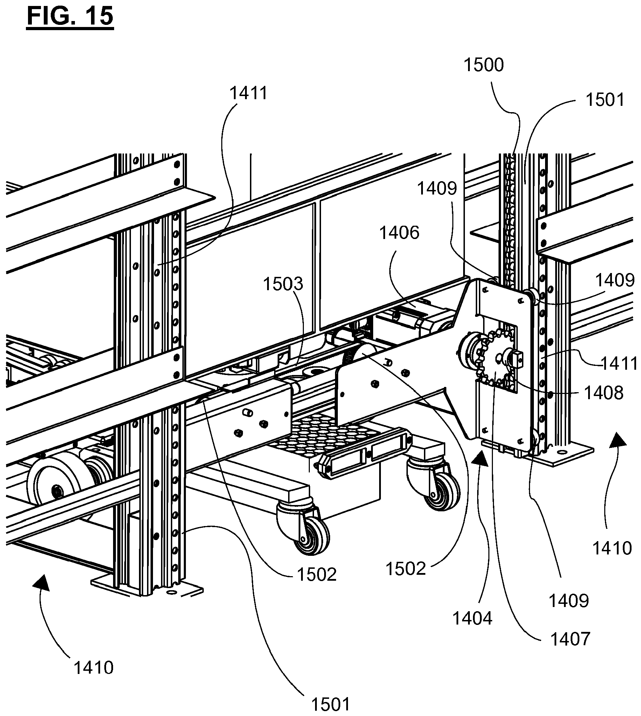

Comme on peut le voir sur la **figure 15****,** qui est une vue de détail en perspective du module de grimpe 1404 rétractable en position écartée, la roue dentée 1407 coopère avec les maillons d'une chaîne à rouleaux 1500 maintenue au fond d'un rail profilé en C 1501 fixé au montant 1411 des rayonnages 1410.

Chaque moteur 1406 est commandé indépendamment par un module de contrôle de la position des arbres des moteurs (non représenté sur les figures 14 et 15), afin de garantir que le robot 1400 reste horizontal et que la charge ne chute pas. Ainsi, le module de contrôle adapte la vitesse de chaque moteur 1406 pour compenser l'écart entre les rouleaux des chaînes fixés sur chaque montant, dont la longueur peut varier lors de leur fabrication, compte-tenu des tolérances de fabrication.

Il convient en effet de noter que, sur des montants de 10 à 12m, équipés de chaînes de même type, l'écart de position entre les rouleaux d'extrémités des deux chaînes peut atteindre 20mm.

Sur la figure 15 on peut également voir que le robot 1400 comprend un système de translation du module de grimpe 1404 entre une position écartée et une position rétractée. Ce système de translation comprend deux poulies 1502 et une courroie crénelée 1503 solidaire de l'embase 1405. Pour sortir ou rentrer le module de grimpe 1404, la poulie 1502 menante, actionnée par un moteur (non représenté sur la figure 15), entraîne la courroie crénelée 1503 qui commande la translation du module de grimpe 1404.

La roue d'appui latéral 1408 sert de butée au contact du montant 1411 lors de la sortie du module de grimpe 1404. Cette roue garantit donc la position relative de la roue dentée 1407 par rapport à la chaîne 1500 et au fond du profilé en C 1501 et évite ainsi que les dents de la roue dentée 1407 frottent au fond du profilé 1501.

C'est donc le sens de rotation du moteur pas à pas qui permet de déplacer le module de grimpe 1404 entre la position rétractée pour les déplacements au sol et la position écartée pour grimper sur les rayonnages.

### 6.3. Autre exemple de système de préparation de commandes

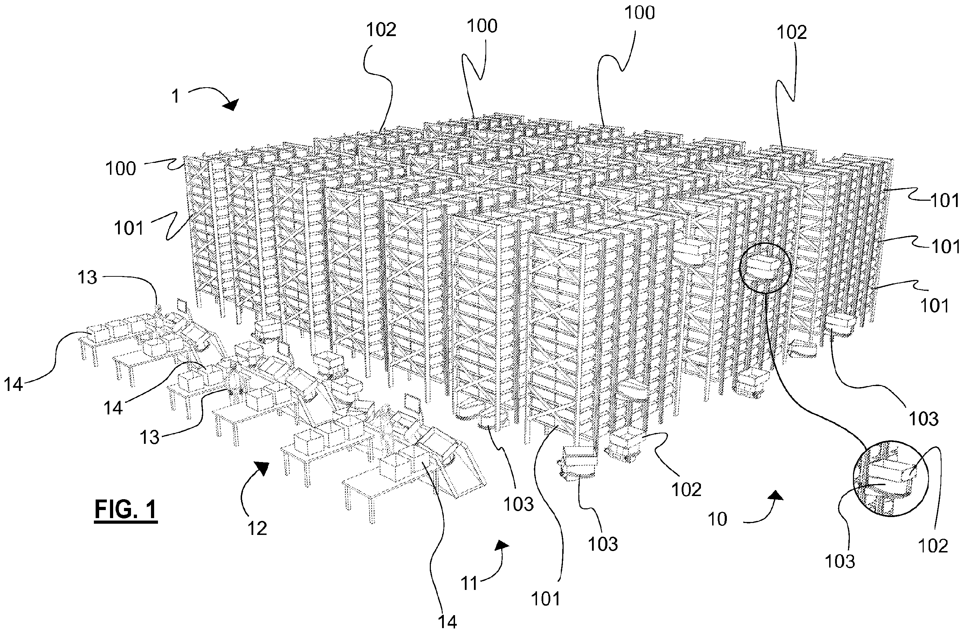

Sur la **figure 1****,** on a illustré un entrepôt 1 destiné au stockage de produits en vue de leur expédition. Cet entrepôt est réparti entre une aire de stockage 10 et une zone de préparation 11 de commandes.

Dans la zone de préparation 11 sont disposés des postes de préparation de commandes 12 sur lesquels des opérateurs 13 préparent des colis 14 avec les produits d'une commande.

L'aire de stockage 10 est organisée en rayonnages 100 avec des étagères sur plusieurs niveaux 101, étagères sur lesquelles sont entreposés des bacs 102 qui contiennent les produits ou articles stockés.

Une flotte de chariots à guidage automatique 103 (« Automatic Guided Véhicle » en anglais) assure le transport des bacs 102 entre l'aire de stockage 10 et les postes de préparation de commandes 12.

Chaque robot 103 reçoit les informations de localisation du bac 102 contenant l'article à aller chercher, pour compléter une commande traitée par l'un des opérateurs 13. Le robot 103 se rend à l'emplacement où est rangé le bac 102 et l'extrait du niveau 101 du rayonnage 100 spécifié par les informations de localisation reçues. Ensuite, le robot 103 transporte le bac 102 jusqu'au poste de préparation de commandes 12. L'opérateur 13 n'a plus qu'à prélever la quantité d'articles commandés et les emballer. Le robot 103 rapporte ensuite le bac 102 à son emplacement dans l'aire de stockage 10.

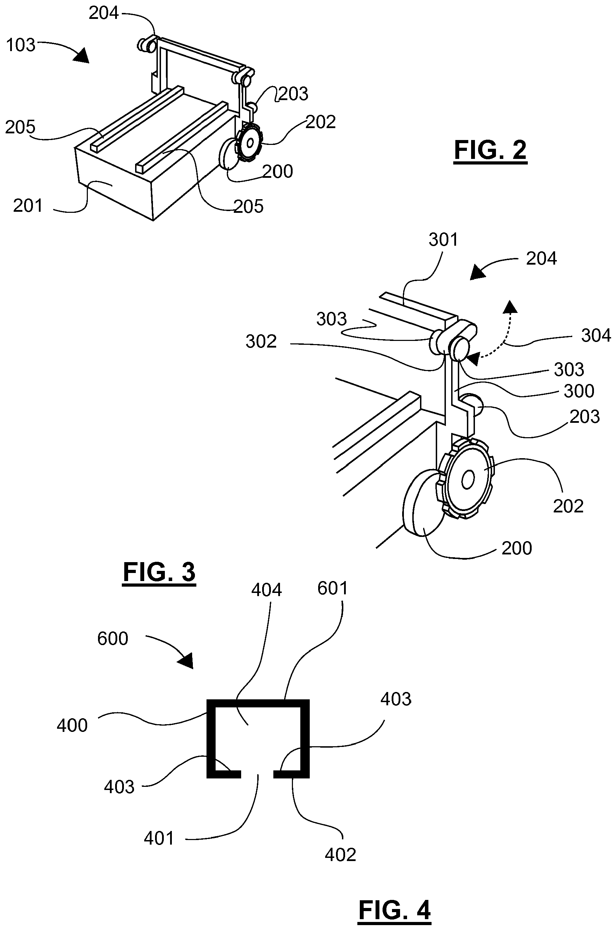

Pour rouler sur le sol, comme l'illustre la **figure 2****,** le robot 103 est équipé de deux roues motrices 200 avant, indépendamment motorisées, et d'une roue folle à l'arrière (non représentée sur la figure 2). Cette roue folle assure la stabilité et l'isostatisme au sol du robot 103.

Dans des variantes de cet exemple particulier, le robot peut se déplacer sur deux roues et des patins ou être équipé de plusieurs roues folles.

Du fait de la motorisation indépendante des roues 200, le robot présente un rayon de braquage très faible permettant d'effectuer sur une surface réduite un virage à 90 degrés pour s'aligner avec un rayonnage.

On notera que les robots 103 sont compacts et légers. Leur masse est en effet inférieure à 30 kilogrammes.

Sur la figure 2, on peut voir que le châssis du robot 103 est équipé de deux roues dentées 202 ou pignons d'escalade, de deux galets de guidage latéral 203 et d'un dispositif anti basculement 204, qui permettent au robot de grimper sur un rayonnage 100.

Dans cet exemple particulier, les axes des deux roues dentées 202 sont sensiblement parallèles aux axes des roues motrices 200 de roulage et les axes des galets de guidage 203 sont orthogonaux à ceux des roues dentées 202.

Avantageusement, les moteurs qui actionnent indépendamment les deux roues motrices 200 assurent la motricité du robot lorsqu'il grimpe en entraînant chacun une roue dentée 202.

Sur la vue de détail **figure 3****,** on peut voir que le dispositif anti basculement 204 comprend, sensiblement au droit des deux roues dentées 202, deux bras 300 sensiblement verticaux, qui supportent à leurs extrémités distales un arbre 301 solidaire des cames 302. À l'extrémité de chacune des cames 302, est montée une contre-roue 303 libre en rotation. On constate également que l'axe des contre-roues 303 est parallèle à l'axe des roues motrices 202.

Enfin, le robot 103 comprend une pelle télescopique 205 afin de manipuler, c'est-à-dire assurer la préhension du bac 102. Cette pelle télescopique 205 est représentée schématiquement sur la figure 2 en position transport. Ainsi le robot 103 est capable de prélever ou déposer les bacs 102, quel que soit le niveau 101 de l'étagère du rayonnage 100.

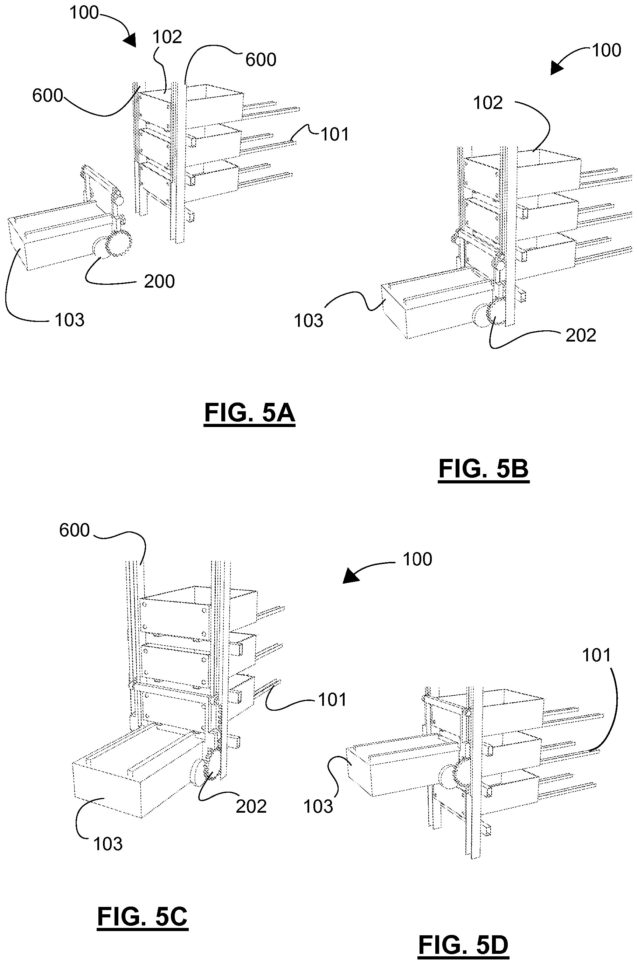

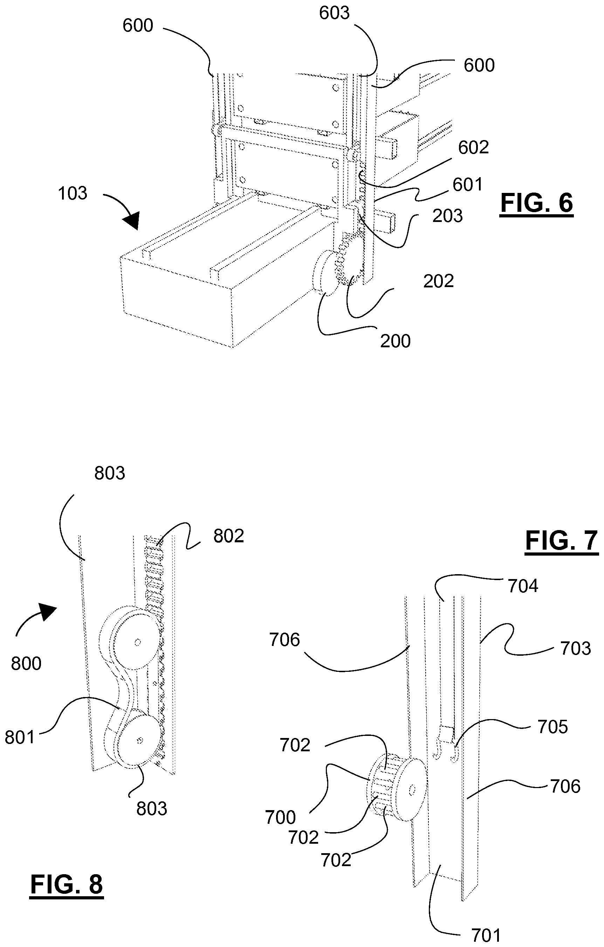

Comme l'illustre la **figure 6** qui est une vue de détail de la figure 5C, le rayonnage 100 comprend deux montants 600 verticaux qui servent de chemin de roulement au robot 103 durant l'escalade. Les montants 600 sont obtenus à partir d'un rail profilé en "C" dont une face 601 comprend des encoches 602, ou perforations, qui forment une échelle 603. Les encoches 602 régulièrement espacées de la valeur du pas des roues dentées 202 s'étendent sensiblement perpendiculairement à l'axe longitudinal des montants 600.

Comme on peut le voir sur la **figure 4** qui est une vue en coupe d'un rail profilé utilisé comme montant des rayonnages, le profilé 400 des montants 600 est un profilé en C, qui présente une fente 401 entre deux ailes 402 sur la face opposée à l'échelle 603. Cette fente 401 permet à la roue dentée 202 d'atteindre le fond du profilé 400 et de s'engrener dans les encoches 602. La roue dentée 202 et l'échelle 603 coopèrent ainsi à la manière d'un mécanisme pignon-crémaillère.

Sur la figure 4, on constate également que les ailes repliées 402 du profilé 400 forment deux surfaces de maintien 403, de part et d'autre de la fente 204. Ces surfaces de maintien 403, en vis-à-vis de l'échelle 603, sont destinées à servir d'appui et de surfaces de roulage aux contre-roues 303, de sorte à reprendre les efforts correspondant au poids du robot 103 et de sa charge, qui sont en porte à faux, et à empêcher que le robot bascule au cours de l'escalade.

Pour permettre le passage des contre-roues 303, le profilé du montant 600 est évidé dans sa partie inférieure, comme on peut le voir sur la figure 6.

Sur les **figures 5A à 5D****,** on a représenté les étapes permettant au robot 103 s'approchant du rayonnage 100, de grimper sur ces derniers pour atteindre un bac 102 entreposé au second niveau 101.

Le robot 103 programmé pour prendre le bac 102 du second niveau 101 se présente tout d'abord face au rayonnage 100 en s'alignant sur les montants 600 tel que représenté à la figure 5A. Le robot 103 s'avance ensuite jusqu'à ce que les dents des roues dentées 202 pénètrent dans les encoches 602 des échelles 603 des montants 600, comme l'illustre la figure 5B.

Ensuite, les contres-roues 303 du dispositif anti basculement 204 sont introduites dans le profilé 400 comme on le constate sur la figure 5C et la vue de détail de la figure 6. Pour cela, l'arbre 301 effectue une rotation 304, qui permet d'insérer les cames 302 dans les fentes 401 et d'engager les contre-roues 303 dans un volume intérieur 404 des montants 600.

Finalement, la rotation des roues dentées 202 permet au robot 103 de grimper sur les montants 600 du rayonnage 100, tandis que les contre-roues 303 roulent sur les surfaces de maintien 403 des montants 600, ce qui permet de conserver l'assiette du robot 103 et éviter son basculement.

Au cours de cette ascension, le robot 103 est guidé latéralement dans le montant 600 par les galets de guidage latéral 203.

Lorsque le robot arrive en face du second niveau 101 (voir la figure 5D), le robot 103, à l'aide de la pelle télescopique 205 schématisée, saisit le bac 102 et le ramène à l'aplomb du châssis 201, en position de transport.

En descendant du rayonnage 100, le robot 103 lorsqu'il atteint le sol libère le dispositif anti basculement 204 des montants 600 pour pouvoir s'écarter, puis il roule jusqu'à la zone de préparation de commandes.

Selon une variante, illustrée partiellement sur la **figure 8****,** le robot est équipé de deux chenilles 801 pour grimper sur des montants 800, qui s'engrènent sur une crémaillère 802 formée d'une fine tôle emboutie logée dans chacun des montants. On notera que l'empreinte de la crémaillère 802 est adaptée pour coopérer avec la chenille 801, ce qui permet de réduire le bruit généré lors de l'escalade.

Sur cette figure 8, on constate également que la chenille 801 est formée d'une courroie crantée entraînée par une première poulie et mise en tension pas une deuxième poulie folle.

Selon une variante, chaque chenille 801 coopère avec des encoches qui forment une échelle sur un montant d'un rayonnage.

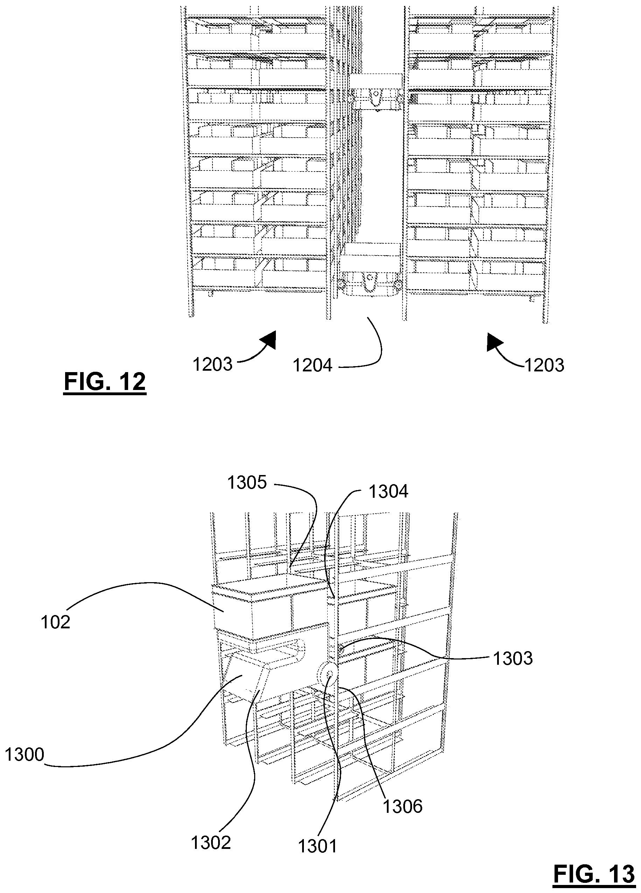

Selon une autre variante, en référence à la **figure 13****,** le robot 1300 est équipé de deux roues motrices 1301 disposées à une extrémité du châssis 1302 et de deux contre-roues 1303 amovibles à cette même extrémité.

Au sol, les roues motrices 1301 permettent le déplacement du robot 1300. Ces mêmes roues 1301 permettent au robot de grimper sur les montants 1305 des rayonnages.

Lors d'une ascension, ces roues motrices 1301 sont au contact d'une face avant 1304 des profilés constituants les montants 1305, tandis que les contre-roues 1303 se rabattent sur une face arrière 1306 des montants 1305.

Avantageusement, la bande de roulement de ces roues 1301 est antidérapante ou possède des crampons.

Le poids du robot 1300 qui est en porte à faux par rapport aux roues motrices 1301 créé un arc-boutement qui produit la force de friction permettant l'escalade du montant. On notera qu'avantageusement, la force de friction augmente avec le poids du robot 1300 et de sa charge dans le bac 102.

### 6.4. Autre exemple de système de préparation de commandes

Selon un autre exemple de mode de réalisation, le robot est équipé de deux tambours 700 motorisés, montés chacun d'un côté du châssis du robot. Comme on peut le voir sur la **figure 7****,** chaque tambour 700 est formé de deux disques 701 maintenus solidaires par des tiges 702 de liaison. Pour l'escalade, le montant 703 est un profilé en U équipé d'une sangle704 dont une première extrémité est fixée au sommet du montant 703 et qui présente un crochet 705 fixé à sa seconde extrémité.

Pour grimper au montant, le robot vient accrocher une tige 702 du tambour au crochet 705 en initiant la rotation du moteur qui entraîne la rotation du tambour 700. Ensuite, le robot monte le long du rayonnage en enroulant la sangle 704 autour du tambour 700, à la manière d'un treuil. Pour redescendre, il suffit de dérouler la sangle 704 autour du tambour.

Lors d'un déplacement vertical, les disques 701 du tambour 700 sont guidés latéralement par les côtés 706 du montant 703.

### 6.5. Autre exemple de système de préparation de commandes

Dans un autre exemple de mode de réalisation illustré sur la **figure 12****,** un robot 1200 est équipé aux quatre extrémités d'un châssis 1201 de deux paires de roues dentées rétractables 1202 montées chacune sur un axe mobile.

Comme on peut le voir sur la figure 12, le robot 1200 peut monter entre deux rayonnages 1203 disposés parallèlement et en vis-à-vis de part et d'autre d'une allée 1204, sur lesquels sont fixés des montants 1205 identiques à ceux présentés en référence aux figures 4 et 6, qui se font face.

Pour escalader les rayonnages 1203, le robot 1200, après s'être aligné sur les montants 1205, déploie les quatre roues dentées 1202 en actionnant les axes mobiles, ce qui permet aux roues dentées 1202 de s'engrener sur les échelles des quatre montants 1205. La rotation des roues dentées 1202 permet de déplacer verticalement le robot 1200, qui peut grimper ou descendre le long des montants.

On notera que, dans ce mode de réalisation particulier, le poids du robot 1200 est réparti sur les quatre montants 1205.

### 6.6. Autres caractéristiques optionnelles et avantages de l'invention

Dans des variantes des modes de réalisation de l'invention détaillés ci-dessus, il peut également être prévu :
- d'équiper un chariot à guidage automatique de deux roues motrices centrées sur celui-ci, tandis que deux roues folles sont disposées en périphérie et assurent la stabilité du chariot. Cette géométrie des trains roulants est alors couplée avec un système de balancier qui permet de garantir l'isostatisme et de répartir le poids du robot et de sa charge, sur les quatre roues, indépendamment des imperfections du sol ;
- un dispositif de freinage sur le robot pour les phases d'ascension et descente ;
- une descente automatique du robot en cas d'anomalie, par exemple en cas de perte de puissance électrique. Dans cette situation, l'outil de préhension est rangé, les freins sont relâchés, et la vitesse de descente jusqu'au sol est limitée en exerçant un champ magnétique sur le ou les moteurs des moyens de grimpe, de sorte à créer un frein visqueux ;
- une localisation en altitude, par reconnaissance des étagères qui supportent des bacs, par reconnaissance des bacs par exemple à l'aide d'une puce RFID (de l'acronyme anglais Radio Fréquency Indentification), ou encore par les encoches ou crans qui forment les échelles d'escalade ;
- des fourches ou une pelle télescopique sur le robot pour lever, translater et baisser le bac, dans lequel, le déplacement vertical du robot permet de lever et baisser le bac nécessaire à la prise ou à la dépose de celui-ci ;
- des bras latéraux télescopiques sur le robot qui permettent de pousser et/ou tirer des bacs, en les faisant glisser sur leur étagère ;
- un bras qui pousse et/ou tire un bac par l'avant, en le faisant glisser sur son étagère ;
- un doigt au bout d'une fourche télescopique qui permet de pousser ou tirer un bac ;
- d'équiper le chariot d'une balance de pesée des bacs qui permet de faire un contrôle continu de l'inventaire du bac ;
- des montants d'escalade installés à proximité immédiate des rayonnages, qui permettent au robot de monter et descendre le long des rayonnages, ces montants pouvant être fixés au sol ou à un rayonnage
- une chaîne qui remplace les échelles à encoches des montants.

Les exemples de système de préparation de commandes décrit ci-dessus peuvent être utilisés dans différents types d'environnements industriels, et par exemple dans un centre logistique de préparation de commandes ou au sein d'une chaîne logistique d'approvisionnement en pièces détachées ou en composants d'une chaîne de production.

## Revendications

1. Système de préparation de commandes comprenant :
- deux montants (1411) solidarisés à deux rayonnages (1410) distincts ;
- un chariot (1400) à guidage automatique présentant au moins deux roues de roulage (1402), destiné à prélever des objets d'une commande dans au moins un desdits rayonnages (1410), et des moyens de grimpe motorisés (1404) aptes à coopérer avec lesdits montants de sorte à permettre audit chariot (1400) de s'élever le long desdits montants,
lesdits moyens de grimpe comprenant deux et seulement deux roues dentées (1407) et/ou deux et seulement deux courroies crantées d'axes sensiblement parallèles, destinées chacune à coopérer avec un desdits deux montants (1411), les axes des roues dentées (1407) et/ou les axes des poulies entraînant lesdites courroies crantées étant sensiblement orthogonaux aux axes des roues de roulage (1402),
chacun desdits montants (1411) présentant une pluralité d'encoches s'étendant sensiblement perpendiculairement à l'axe longitudinal dudit montant (1411à, destinées à accueillir les dents de ladite roue dentée (1407) ou de ladite courroie crantée coopérant avec ce montant (1411) et espacées de la valeur du pas de ladite roue dentée (1407) ou de ladite courroie crantée,
chacune des roues dentées (1407) ou des courroies crantées étant montée sur un support mobile par rapport au châssis dudit chariot (1400) entre deux positions :
- une position écartée dans laquelle au moins une partie de ladite roue dentée (1407) ou de ladite courroie crantée montée sur ledit support fait saillie latéralement hors de l'alignement dudit châssis ;
- une position rétractée, dans laquelle la roue dentée (1407) ou la courroie crantée montée sur ledit support est en vis-à-vis dudit châssis ;
**caractérisé en ce que** lesdits moyens de grimpe (1404) comprennent des moyens pour empêcher le basculement dudit chariot (1400) comprenant au moins une contre-roue (1409) destinée à rouler sur un desdits montants (1411), montée sur un desdits supports,
et **en ce que** lesdits supports sont montés sensiblement à deux extrémités opposées du châssis dudit chariot (1400), suivant une diagonale.

2. Système de préparation de commandes selon la revendication 1, **caractérisé en ce que** lesdits montants (1411) sont des rails profilés en C (1501).

3. Système de préparation de commandes selon l'une quelconque des revendications 1 et 2, **caractérisé en ce que** lesdits montants (1411) sont des montants dudit rayonnage (1410).

4. Système de préparation de commandes selon l'une quelconque des revendications 1 à 3, **caractérisé en ce qu'**il comprend des moyens de fixation desdits montants (1411) chacun à un desdits rayonnages (1410).

5. Système de préparation de commandes selon l'une quelconque des revendications 1 à 4, **caractérisé en ce que** ledit chariot (1400) présente des moyens de préhension d'un bac (102) de stockage d'objets.

6. Système de préparation de commandes selon l'une quelconque des revendications 1 à 5, **caractérisé en ce que** au moins une desdites roues de roulage (1402) et lesdits moyens de grimpe motorisés (1404) sont entraînés par le même moteur.

7. Système de préparation de commandes selon l'une quelconque des revendications 1 à 6, **caractérisé en ce qu'**il comprend des moyens de freinage desdits moyens de grimpe (1404).

8. Système de préparation de commandes selon l'une quelconque des revendications 1 à 7, **caractérisé en ce qu'**un desdits montants (1411) est un montant d'un premier rayonnage (1410) et l'autre montant (1411) est un montant d'un deuxième rayonnage (1410) parallèle audit premier rayonnage (1410), lesdits premier et deuxième rayonnages (1410) délimitant une allée de circulation dudit chariot (1400).

9. Système de préparation de commandes selon l'une quelconque des revendications 1 à 8, **caractérisé en ce qu'**une chaîne (1500) est solidarisée à chacun desdits montants (1411) et **en ce que** lesdites encoches sont formées par l'espace intérieur des maillons desdites chaines (1500).

## Patentansprüche

1. Kommissioniersystem, umfassend:
- zwei Pfosten (1411), die mit zwei verschiedenen Regalen (1410) fest verbunden sind;
- ein automatisch geführter Wagen (1400) mit mindestens zwei Laufrädern (1402), der bestimmt ist, Gegenstände einer Bestellung aus mindestens einem der Regale (1410) zu entnehmen, und motorisierten Klettermitteln (1404), die imstande sind, mit den Pfosten derart zusammenzuwirken, dass der Wagen (1400) in der Lage ist, entlang der Pfosten hochzuklettern,
wobei die Klettermittel zwei und nur zwei Zahnräder (1407) und/oder zwei und nur zwei Zahnriemen mit etwa parallelen Achsen umfassen, die jeweils bestimmt sind, mit einem der zwei Pfosten (1411) zusammenzuwirken, wobei die Achsen der Zahnräder (1407) und/oder die Achsen der Rollen, die die Zahnriemen antreiben, etwa orthogonal zu den Achsen der Laufräder (1402) sind,
wobei jeder der Pfosten (1411) eine Vielzahl von Einkerbungen aufweist, die sich etwa senkrecht zur Längsachse des Pfostens (1411) erstrecken, die bestimmt sind, die Zähne des Zahnrads (1407) oder des Zahnriemens aufzunehmen, die mit diesem Pfosten (1411) zusammenwirken und im Wert der Steigung des Zahnrads (1407) oder des Zahnriemens beabstandet sind,
wobei jedes/r der Zahnräder (1407) oder der Zahnriemen auf einem im Verhältnis zum Gestell des Wagens (1400) zwischen zwei Positionen beweglichen Halter angebracht ist:
- einer beabstandeten Position, in der mindestens ein Teil des auf dem Halter angebrachten Zahnrads (1407) oder Zahnriemens aus der Flucht des Gestells seitlich hervorsteht;
- einer eingezogenen Position, in der das auf dem Halter angebrachte Zahnrad (1407) oder der Zahnriemen gegenüber dem Rahmen ist;
**dadurch gekennzeichnet, dass** die Klettermittel (1404) Mittel umfassen, um das Kippen des Wagens (1400) zu verhindern, die mindestens ein Gegenrad (1409) umfassen, das bestimmt ist, auf einem der Pfosten (1411) zu fahren, das auf einem der Halter angebracht ist,
und dass die Halter etwa an zwei gegenüberliegenden Enden des Gestells des Wagens (1400) gemäß einer Diagonalen angebracht sind.

2. Kommissioniersystem nach Anspruch 1, **dadurch gekennzeichnet, dass** die Pfosten (1411) C-Profilschienen (1501) sind.

3. Kommissioniersystem nach einem der Ansprüche 1 und 2, **dadurch gekennzeichnet, dass** die Pfosten (1411) Pfosten des Regals (1410) sind.

4. Kommissioniersystem nach einem der Ansprüche 1 bis 3, **dadurch gekennzeichnet, dass** es Befestigungsmittel der Pfosten (1411), jeder an einem der Regale (1410), umfasst.

5. Kommissioniersystem nach einem der Ansprüche 1 bis 4, **dadurch gekennzeichnet, dass** der Wagen (1400) Mittel zum Ergreifen eines Lagerbehälters (102) von Gegenständen aufweist.

6. Kommissioniersystem nach einem der Ansprüche 1 bis 5, **dadurch gekennzeichnet, dass** mindestens eins der Laufräder (1402) und der motorisierten Klettermittel (1404) von demselben Motor angetrieben werden.

7. Kommissioniersystem nach einem der Ansprüche 1 bis 6, **dadurch gekennzeichnet, dass** es Bremsmittel der Klettermittel (1404) umfasst.

8. Kommissioniersystem nach einem der Ansprüche 1 bis 7, **dadurch gekennzeichnet, dass** einer der Pfosten (1411) ein Pfosten eines ersten Regals (1410) ist und der andere Pfosten (1411) ein Pfosten eines zweiten Regals (1410) parallel zum ersten Regal (1410) ist, wobei das erste und zweite Regal (1410) einen Fahrweg des Wagens (1400) begrenzen.

9. Kommissioniersystem nach einem der Ansprüche 1 bis 8, **dadurch gekennzeichnet, dass** eine Kette (1500) mit jedem der Pfosten (1411) fest verbunden ist und dass die Einkerbungen vom Innenraum der Glieder der Ketten (1500) gebildet sind.

## Claims

1. An order picking system comprising:
- two uprights (1411) attached to two separate shelves (1410);
- a self-guiding trolley (1400) having at least two running wheels (1402) for picking objects from an order in at least one of said racks (1410), and motorised climbing means (1404) adapted to cooperate with said uprights so as to allow said trolley (1400) to rise along said uprights,
said climbing means comprising two and only two toothed wheels (1407) and/or two and only two toothed belts with substantially parallel axes, each intended to cooperate with one of said two uprights (1411), the axes of the toothed wheels (1407) and/or the axes of the pulleys driving said toothed belts being substantially orthogonal to the axes of the rolling wheels (1402),
each of said posts (1411) having a plurality of notches extending substantially perpendicular to the longitudinal axis of said post (1411) for receiving the teeth of said toothed wheel (1407) or toothed belt cooperating with that post (1411) and spaced apart by the amount of the pitch of said toothed wheel
(1407) or toothed belt, each of the sprockets (1407) or toothed belts being mounted on a support movable relative to the frame of said carriage (1400) between two positions:
- a retracted position, in which the sprocket (1407) or toothed belt mounted on said carrier faces said frame; and
- a retracted position, in which the toothed wheel (1407) or toothed belt mounted on said support faces said frame;
**characterised in that** said climbing means (1404) comprises means for preventing tilting of said carriage (1400) comprising at least one counterwheel (1409) for rolling on one of said posts (1411), mounted on one of said supports,
and **in that** said supports are mounted substantially at two opposite ends of the frame of said carriage (1400), along a diagonal.

2. The order picking system according to claim 1, **characterised in that** said uprights (1411) are C-profile rails (1501).

3. The order picking system according to any one of claims 1 and 2, **characterised in that** said uprights (1411) are uprights of said rack (1410).

4. The order picking system according to any one of claims 1 to 3, **characterised in that** it comprises means for attaching said uprights (1411) each to one of said racks (1410).

5. The order picking system according to any one of claims 1 to 4, **characterised in that** said trolley (1400) has means for gripping an object storage bin (102).

6. The order picking system according to any one of claims 1 to 5, **characterised in that** at least one of said running wheels (1402) and said motorised climbing means (1404) are driven by the same motor.

7. The order picking system according to any one of claims 1 to 6, **characterised in that** it comprises means for braking said climbing means (1404).

8. The order picking system according to any one of claims 1 to 7, **characterised in that** one of said uprights (1411) is an upright of a first rack (1410) and the other upright (1411) is an upright of a second rack (1410) parallel to said first rack (1410), said first and second racks (1410) delimiting a circulation aisle of said trolley (1400).

9. The order picking system according to any one of claims 1 to 8, **characterised in that** a chain (1500) is attached to each of said uprights (1411) and **in that** said notches are formed by the inner space of the links of said chains (1500).
